(19) Europäisches Patentamt
European Patent Office
Office européen des brevets

(11) Publication number: 0 127 292 B1

# (12) EUROPEAN PATENT SPECIFICATION

(45) Date of publication of patent specification: **15.06.88**

(51) Int. Cl.$^4$: **B 60 K 41/14**

(21) Application number: **84302349.0**

(22) Date of filing: **05.04.84**

## (54) Method for controlling an engine equipped with continuously variable transmission.

(30) Priority: **23.05.83 JP 89188/83**

(43) Date of publication of application:
**05.12.84 Bulletin 84/49**

(45) Publication of the grant of the patent:
**15.06.88 Bulletin 88/24**

(84) Designated Contracting States:
**DE FR GB**

(56) References cited:
**EP-A-0 059 426**
**EP-A-0 118 184**
**GB-A-2 058 257**
**US-A-4 291 594**
**PROCEEDINGS OF THE 30th ANNUAL CONFERENCE OF THE IEEE VEHICULAR TECHNOLOGY SOCIETY, INTERNATIONAL CONFERENCE ON TRANSPORTATION ELECTRONICS, 15th-17th, September 1980, Dearborn, Michigan, pages 1-8, Vehicular Technology Society IEEE, US; J.M. IRONSIDE: "Continuously variable transmission control"**
**AUTOMOTIVE ENGINEERING, vol. 86, no. 8, August 1978, pages 98-99, New York, US; D. SCOTT: "Belt-drive automatic programmed for economy"**

(73) Proprietor: **TOYOTA JIDOSHA KABUSHIKI KAISHA**
**1, Toyota-cho Toyota-shi**
**Aichi-ken 471 (JP)**

(72) Inventor: **Ito, Hiroshi**
**6 Banchi 3 6 Chome**
**Ima-cho Toyota-shi Aichi-ken (JP)**
Inventor: **Hiramatsu, Shigeki**
**1-36, Aza Ennyogairi**
**Motojuku-cho Okazaki-shi Aichi-ken (JP)**
Inventor: **Takada, Mitsuru**
**530, Toyota-cho**
**Toyota-shi Aichi-ken (JP)**

(74) Representative: **Ben-Nathan, Laurence Albert et al**
**Urquhart-Dykes & Lord 91 Wimpole Street**
**London W1M 8AH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 127 292 B1

**Description**

The present invention relates to a method for controlling an engine equipped with a continuously variable transmission (hereinafter referred to as CVT), and particularly to a method for controlling the engine speed at a transient shifting condition.

A CVT with a V-belt extending between driving and driven pulleys, with one or both of the pulleys being able to adjust the size of their respective V-shaped openings which hold the V-belt, thereby controlling the revoltion ratio between the driving and driven pulleys. The size of the V-shaped opening is varied by changing the amount of pressure being fed into or drained from a hydraulic cylinder of either of the pulleys. Hence, the effective diameter of the pulley can be varied by changing the amount of pressure being fed into or drained from the hydraulic cylinder, thereby allowing for a continuously varying ratio of driving pulley diameter to driven pulley diameter. The V-shaped openings on the driving and driven pulleys are each defined by an area between a fixed portion of the pulley and a movable portion of the pulley, the size of the V-shaped opening being dependent upon the pressure inputted to or drained from the hydraulic cylinders. In order to provide hydraulic pressure to each of the movable pulleys, a hydraulic apparatus, is provided. Such a CVT has been employed from the standpoint that it can obtain a minimum fuel consumption rate. A desired horsepower of the CVT is determined to be a function of an amount of a throttle opening θ. A desired engine speed under a steady state is determined to have such a value $RPM_e$ that the desired horsepower may be obtained at a minimum fuel consumption rate.

GB—A—2,058,257 and EP—A—0,059,426 describe methods of controlling a CVT in which the transmission ratio of variable diameter pulleys is altered in a transient shifting condition as a function of a load dependent and a speed dependent control value.

EP—A—0,118,184, which is a reference under Article 54(3) EPC, describes a method of controlling an engine associated with a CVT in which the engine speed is intially changed to an intermediate value and then gradually changed to a desired steady state value during a transient shifting condition.

Heretofore, the desired engine speed in a transient shifting condition has not been designed to have a different value from the desired engine speed under a steady state condition. The desired engine speed in a transient shifting condition has been designed to have the same value as that under a steady state condition. According to this design, it takes relatively long time for an actual engine speed to reach the desired engine speed under a steady state condition, and this impairs the drivability particularly concerning the acceleration of the vehicle. In order to avoid the above described disadvantages, an improved method for controlling an engine speed is proposed in EP—A—118184. According to this method, the desired engine speed is designed to be a function of an amount of a throttle opening. The engine speed or speed ratio of CVT is controlled such that the actual engine speed may be same as that of the desired engine speed. When the amount of the increase in throttle opening is large, the desired engine speed in a transient shifting condition is determined. This desired engine speed in a transient shifting condition is obtained by multiplying a coefficient B by a value determined by substracting the desired engine speed $RPM_{os'}$ under a steady state condition before the change of the amount of the throttle opening from the desired engine speed $RPM_{os}$ under a steady state after the change of the amount of the throttle opening, namely $B \cdot (RPM_{os} - RPM_{os'})$. The coefficient B is selected to have a positive value which is less than 1. When the increase in the amount of the throttle opening is large, the engine speed discontinuously increases up to the engine speed in a transient shifting condition, which is determined by the above described way. After the discontinuous increase in the engine speed, the engine speed gradually increases from the engine speed in the transient shifting condition up to the desired engine speed after the amount of the throttle opening is changed.

According to the above-described control of the engine speed, the desired engine speed in the transient shifting condition can smoothly increase. This effects a smooth increase in the acceleration of a vehicle. However, the coefficient B of the above-described control is determined to be a fixed value regardless of the vehicle speed or the amount of the throttle opening after the amount of the throttle opening is changed. Due to this, following disadvantages are occurred. If the coefficient B is determined to have a value suitable for the high vehicle speed or a large amount of throttle opening after the amount of the throttle opening is changed, the desired engine speed $RPM_e$ does not increase so much when a vehicle runs at a low vehicle speed or the throttle opening after the change of the throttle opening is small. This impairs the acceleration of a vehicle. Conversely, if the coefficient B is determined to have a value suitable for the low vehicle speed or a small throttle opening after the change of the throttle opening is made, the amount of the increase in the engine speed from the desired engine speed before the change of the throttle opening to the engine speed in the transient condition becomes small, thereby it takes a relatively long time to reach up to the desired engine speed after the change of the throttle opening is made. This impairs the acceleration of a vehicle.

The present invention was made in view of the foregoing backgound and to overcome the foregoing drawbacks. It is an object of this invention to provide a method of controlling a continuously variable transmission which improves the drivability of a vehicle.

To attain the above object the present invention provides a method as claimed in claim 1.

The above object, features and advantages of the present invention will become more apparent from the following description of the preferred embodiment taken in conjunction with the accompanying drawings.

Fig. 1 is a schematic view of the hydraulic apparatus employing the method of the present invention;

Fig. 2 is a circuit diagram of the electronic control unit employed in the present invention;

Fig. 3 is a graph showing the relation between the desired engine speed in the transient shifting condition and the throttle opening according to the lapse of the time at the acceleration stage;

Fig. 4 is a graph showing the relation between the desired engine speed, actual engine speed and torque in the transient shifting condition according to the lapse of the time at the acceleration stage;

Fig. 5 is a graph showing the relation between the coefficient B of the engine speed and the throttle opening; and

Fig. 6 is a flow chart illustrating operations according to the present invention.

The present invention is described in detail with reference to the accompanying drawings which illustrate embodiments of the present invention.

Figure 1 illustrates a schematic view of the hydraulic apparatus employing the method of the present invention. An engine 1 is connected through a crank shaft 2 and a clutch 3 with a shaft 5. The shaft 5 is an input shaft connected with a CVT 4. The CVT 4 has a couple of pulleys 6 and 7. The pulley 6 is a driving pulley mounted on the driving and input shaft 5 which is driven by the engine 1. The other pulley 7 is a driven pulley mounted on a driven and output shaft 8. The torque of the shaft 8 is outputted to wheels (not shown in drawings). A torque transmitting continuous V-belt 9 extends between the pulleys 6 and 7. The driving pulley 6 has a movable member 6a, which is axially displaced on and rotates with the input shaft 5, and a member 6b, which is fixed to and rotates with the input shaft 5. The movable member 6a is axially displaced by the pressure exerted upon it by a hydraulic cylinder 6c. When the movable member 6a is axially displaced in a direction toward the opposite member 6b, the width defined between the members 6a and 6b is decreased. The amount of oil supplied through a flow control valve 19 to the cylinder 6c is controlled. This results in an increase in the effective diameter of the driving pulley 6a. As a result, the speed ratio "e" (the rotating speed of the driven pulley (7) / the rotating speed of the driving pulley (6), $RPM_{out}/RPM_{in}$) is increased. The $RPM_{in}$ is governed by the engine speed which is represented by $RPM_e$. When the amount of the oil drained from the cylinder 6c through the flow control valve 19 is controlled, the speed ratio is decreased.

Similarly, the driven pulley 7 has a movable member 7b, which is axially displaced on and rotates with the output shaft 8, and a non-movable member 7a, which is fixed to and rotates with the output shaft 8. The movable member 7b is axially displaced by the pressure exerted upon it by a hydraulic cylinder 7c. When the movable member 7b is axially displaced in a direction toward the opposite member 7a, the width defined between the members 7a and 7b is decreased. This results in an increase in the effective diameter of the driven pulley 7.

To minimize the amount of engine power consumed by a hydraulic fluid pump, the hydraulic pressure in the cylinder 7c is controlled to be as small as possible while maintaining a torque necessary to keep the belt 9 from slipping while rotating around the driving pulley 6 and the driven pulley 7. The hydraulic pressure of the cylinder 6c is varied to adjust the speed ratio. The amount of pressure in the hydraulic cylinder 6c is designed to be smaller than that of the hydraulic pressure in the hydraulic cylinder 7c. However, even though the value of the hydraulic pressure supplied to the hydraulic cylinder 6c is less than the value of the hydraulic pressure supplied to the hydraulic cylinder 7c, the system is designed so that a greater overall hydraulic pressure is realized in the hydraulic cylinder 7c than in the hydraulic cylinder 6c because the cylinder 6c has the larger square exerted upon by the hydraulic pressure than that of the hydraulic cylinder 7c. Hence, it is possible to obtain a speed ratio of more than or at least equal to one. The CVT 4 is supplied with hydraulic fluid by using the following procedure:

A hydraulic fluid pump 14, driven by a motor, pumps hydraulic fluid from a reservoir 15 to a regulator valve 16. The regulator valve 16 controls the pressure supplied to an oil passage 18 by adjusting an amount of fluid drained from the system, thereby generating a specific line pressure $P_L$ in the oil passage 18. The regulator valve 16 supplies the line pressure $P_L$ through the oil passage 18 to the hydraulic cylinder 7c of the driven pulley 7 and to a flow control valve 19. The flow control valve 19 is a three port connection valve, and includes an inlet port communicated with the passage 18, a drain port communicated with a drain passage 70 and an oulet port communicated through an oil passage 20 with the hydraulic cylinder 6c of the driving pulley 6. When the flow control valve 19 is in a first position, the inlet port communicates with the outlet port. When the flow control valve 19 is in a second position, there is no communication between the three ports. Finally, when the flow control valve 19 is in a third position, the outlet port communicates with the drain port. A check valve 72 is provided on the drain passage 70. The check valve 72 only allows hydraulic fluid to flow in a single direction, from the flow control valve 19 to the hydraulic fluid reservoir 15.

A sensor 23 detects the rotating speed (CVT input speed) $RPM_{in}$ of the driving pulley 6 which corresponds to the actual engine speed $RPM_e$. A sensor 24 detects the rotating speed (CVT output speed) $RPM_{out}$ of the driven pulley 7. An engine coolant temperature sensor 25 is mounted adjacent a cylinder block of the engine 1 and detects the temperature of the engine coolant. A throttle opening sensor 26 detects an amount of a throttle opening of a throttle valve, which is varied in proportion to a stroke of an accelerator pedal 27 installed adjacent to a passenger seat 29. A sensor 28, mounted near the passenger seat 29, detects the position of a shift lever of the transmission. In case of an automatic transmission the sensor 28 detects the shift range of the transmission.

The signals detected by the foregoing sensors are inputted to an electronic control unit (hereinafter referred to as ECU) 100. The ECU 100 outputs a control signal to the regulator valve 16 and the flow control valve 19.

When the hydraulic pressure of the cylinder 7c of the movable member 7b of the driven pulley 7 increases, the movable member 7b is displaced to approach to the opposite member 7a. Due to this, the contact points between the driven pulley 7 and the belt 9 moves to the points which are positioned in the outer portions of the driven pulley 7. The amount of the line pressure $P_L$ is controlled so that it may not cause the slip between the belt 9 and the driven pulley 7. When the hydraulic pressure in the cylinder 6c of the driving pulley 6 increases, the movable member 6a of the driving pulley 6 is displaced to approach to the opposite member 6b. Due to this, the contact points between the driving pulley 6 and the belt 9 moves to the point which are positioned in the outer portions of the driving pulley 6. Thus, the speed ratios between the driving and driven pulleys are controlled.

The ECU 100 controls the regulator valve 16 and the flow control valve 19 in accordance with the signals detected by the various sensors. Figure 2 shows that the ECU 100 functions as a digital computer, and has a central processing unit (hereinafter referred to as CPU) 32 which carries out arithmetic and logic processing functions, an inter-face (hereinafter referred to as I/F) 35, an analog-digital converter (hereinafter referred to as A/D) 36, a random-access memory (hereinafter referred to as RAM) 33 which temporarily stores the calculated data of the CPU 32, a read-only memory (hereinafter referred to as ROM) 34 which stores a predetermined control program and arithmetic constants therein, and a digital-analog converter (hereinafter referred to as D/A) 37. They are connected by common bus 38. An example of how the ECU 100 functions is given by the following. The I/F 35 receives an output signal from the sensor 23 corresponding to the rotation of the driving pulley 6 ($RPM_{in}$), an output signal from the sensor 24 corresponding to the rotation of the driven pulley 7 ($RPM_{out}$), and the shift position sensor 28. The A/D 36 receives the output signals from the engine coolant temperature sensor 25 and the throttle opening sensor 26. The CPU 32, a microprocessor, then compares the output signals received against any stored information, and issues an output to the D/A 37 which then subsequently outputs any appropriate instructions to the regulator valve 16 and the flow control valve 19.

The memory means 34 works in conjunction with the CPU processing unit 32 in the following manner: The ROM 34 stores a data map which includes the desired engine speed in a transient shifting condition $RPM_o$, as shown in Figure 3, and data relating to the amount of throttle opening, as shown in Figure 5. The CPU 32 compares the actual operating conditions to the data stored in the ROM 34, and if appropriate, outputs a signal which results in the regulator valve 16 and the flow control valve 19 being controlled.

According to the method for controlling an engine speed of the present invention, the requisite horsepower of the engine 1 is determined to be a function of a throttle opening θ of an intake system, and the desired engine speed is determined to have a value when the requisite horsepower of the engine 1 is obtained at a minimum fuel consumption rate. Hence, the desired engine speed designated by a reference $RPM_{ins}$ is a function of a throttle opening θ. The desired speed ratio $e_s$ under a steady state condition is defined by speed ratio $RPM_{out}/RPM_{ins}$. $RPM_{out}$ is the actual rotating speed of the output shaft 8 of the driven pulley 7. Under a steady state condition of the CVT, the flow control valve 19 is controlled so that the actual rotating speed $RPM_{in}$ of the input shaft 5 can be same as that of the desired engine speed $RPM_{ins}$ of the input shaft 5, and the speed ratio e can be same as that of the desired speed ratio $e_s$.

Figure 3(a) illustrates a graph showing the relationship between a desired engine speed ($RPM_o$) in a transient shifting condition of the engine and a time "t" counted during the acceleration stage.

Figure 3(b) illustrates a graph showing the relationship between the amount of throttle opening θ and a time "t" counted during the acceleration stage. The throttle opening increases from a value $θ_1$ to a value $θ_2$ when the time equals $t_0$. The ECU 100 compares a desired engine speed (first desired engine speed) $RPM_{os'}$, which corresponds to a throttle opening of $θ_1$, with a desired engine speed (second desired engine speed) $RPM_{os'}$, which corresponds to a throttle opening of $Θ_2$. If the results of the comparison are within the scope defined by following equation:

$$|RPM_{os}-RPM_{os'}|\geq\Delta RPM_a \qquad (1)$$

where, $\Delta RPM_a$ is a predetermined constant and the magnitude of the difference between $RPM_{os}$ and $RPM_{os'}$ is compared with $\Delta RPM_a$, then the desired engine speed in a transient shifting condition ($RPM_o$) varies as indicated by the solid line shown in Figure 3(a). This variation is further discussed below.

(a) $t_0\leq t\leq t_1$

When the time "t" is the value somewhere between $t=t_0$ and $t<t_1$, i.e., $t_0\leq t<t_1$, then the

desired engine speed in the transient shifting condition ($RPM_o$) is maintained such that $RPM_o$ is a value of $RPM_{os'}$ during a delayed time A. For example, "$t_1$" is a value somewhere between 0.2 seconds or 0.3 seconds.

(b) $t=t_1$

When the time "t" is described by $t=t_1$, the desired engine speed in the transient shifting condition ($RPM_o$), increases until it is equal to a desired intermediate engine speed ($RPM_{ob}$). The $RPM_{ob}$ is determined by the following equation:

$$RPM_{ob}=RPM_{os'}+B(RPM_{os}-RPM_{os'})$$

where, B equals a predetermined coefficient; $0<B<1$. The value of the predetermined coefficient B varies according to the amount of the throttle opening and the vehicle speed, as shown in Figure 5.

Hence, the following inequality occurs:

$$RPM_{os'}<RPM_{ob}<RPM_{os}$$

(c) $t_1<t<t_2$

When the time "t" continues to run from $t_1$ to $t_2$, the desired engine speed in the transient shifting condition ($RPM_o$) gradually approaches the value of $RPM_{os}$. In this condition,

$$RPM_o=RPM'_o+C_1(RPM_{os}-RPM_{os'})\pm C_2 \quad (2)$$

Where;

$RPM'_o$ corresponds to a previously calculated $RPM_o$, which is reinserted into equation (2) so that a progressive change in engine speed can be realized. Equation (2) results in a different engine speed approximately every regular seconds; $RPM_{os}$ is the desired engine speed under the steady state conditions when the throttle opening is defined by $\theta_2$; $C_1$ and $C_2$ are constants. Note that when the time "t" is equal to $t_1$, $RPM_o$ increases to $RPM_{ob}$ and when the time "t" is equal to $t_2$, $RPM_o$ increases up to $RPM_{os}$.

The ECU 100 determines whether the operator depresses the accelerator pedal and therefore requires an increase in the engine speed during a time A between $t=t_0$ and $t=t_1$. If the operator does not displace the accelerator pedal 27 during the time between $t=t_0$ and $t=t_1$, the ECU 100 does not increase the engine speed ($RPM_e$) and stops any increase in the engine speed ($RPM_e$).

However, if the results of the comparison made by the ECU 100 are not within the scope of equation (1), but are within the scope of the following equation (3), then the desired engine speed in a transient shifting condition ($RPM_o$) is increased in accordance with equation (4).

$$|RPM_{os}-RPM_{os'}|< \Delta RPM_a \quad (3)$$

$$RPM_o=RPM_{os'}+D_1(RPM_{os}-RPM_{os'})\pm D_2 \quad (4)$$

Where, $RPM_{os'}$ corresponds to a previously calculated $RPM_o$, which is reinserted into equation (4) so that a progressive change in engine speed can be realized. Equation (4) results in a different engine speed approximately every regular seconds; $RPM_{os}$ is the desired engine speed under the steady state condition when the throttle opening is defined by $\theta_2$; $D_1$ and $D_2$ are constants; and part of the right side of equation (4) is defined by equation (5):

$$D_1(RPM_{os}-RPM_{os'})\pm D_2=(RPM_{os}-RPM_{os'})/100 \quad (5)$$

$D_1$ and $D_2$ are determined so that the $RPM_o$ on the left side of equation (4) can be gradually varied.

Figure 4 illustrates the graph showing the change of the actual engine speed $RPM_e$ in a transient shifting condition according to the lapse of time t. When the throttle opening θ increases at the time $t_0$, the transient engine speed control according to the present invention commences. As the increased horsepower of the engine 1 generated by the depressed stroke of the accelerator pedal 27, is consumed by accelerating the CVT 4, the torque T of the driven output shaft 8 gradually increases and commences to remarkably accelerate the vehicle around the time $t_3$, as shown by a chain line in Figure 4. At the time $t_3$, the torque T of the driven output shaft 8 and a vehicle's longitudinal acceleration G have each peak points $T_P$ and $G_P$, respectively. The reference $\Delta t$ is defined as the time between $t=t_0$ and $t=t_3$. The desired engine speed $RPM_o$ at the time $t_3$ varies according to the amount of the coefficient B. It is possible to change the values of $T_P$, $G_P$ and $\Delta t$ by changing the value of the coefficient B. According to the present invention, the values of $T_P$, $G_P$ and $\Delta t$ are determined to have the optimum values in view of the vehicle speed V and the amount of varied throttle opening θ. That is, the amount of the coefficient B is determined so that the optimum acceleration of the vehicle may be obtained.

Figure 5 shows the relation between the varied throttle opening θ and the coefficient B according to the variation of the vehicle speed. In this Figure 5, the vehicle speeds of $V_1$ to $V_4$ are designed to have values satisfying the following inequality:

$$V_1>V_2>V_3>V_4$$

The axis of abscissas is expressed by a varied throttle opening θ, but may be expressed by a difference $\Delta\theta$ between the varied throttle opening and the previous throttle opening before the variation.

When the vehicle speed V increases or the varied throttle opening θ increases, the coefficient B increases. However, according to the kinds of a vehicle or engine, the coefficient B may decrease when the vehicle speed V or the varied throttle opening θ increases. The coefficient B is designed to have the maximum value at the fully opened throttle opening (θ=100%) in order to accelerate the vehicle.

Figure 6 shows a flow chart illustrating the operation of the program according to the present invention. This program is an interruption program which is performed after a prescribed timing signal is issued. The ECU 100 commences the operation when the vehicle's main power switch is turned on.

In a first step 42, it is determined whether the value $|RPM_{os}-RPM_{os'}|$ is greater than or equal to $\Delta RPM_a$. Here, $RPM_{os}$ is the desired engine speed under a steady state condition when the throttle opening is varied to the value $\theta_2$. $RPM_{os'}$ is the desired engine speed under the steady state condition when the throttle opening before the change of the throttle opening has the value $\theta_1$. If $|RPM_{os}-RPM_{os'}|$ is greater than or equal to $\Delta RPM_a$, the program proceeds to a step 44. When $|RPM_{os}-RPM_{os'}|$ is greater than or equal to $\Delta RPM_a$, this condition means that the throttle opening $\theta$ varies by a large amount. Conversely, if $|RPM_{os}-RPM_{os'}|$ is less than $\Delta RPM_a$, the program proceeds to a step 64. When $|RPM_{os}-RPM_{os'}|$ is less than $\Delta RPM_a$, this condition means that the throttle opening $\theta$ varies by a small amount. In the step 44, the vehicle speed V and the varied throttle opening $\theta$ are determined. The program proceeds to a step 46. In the step 46, the amount of the coefficient B is calculated from the graph shown in Figure 5 by employing the determined vehicle speed V and varied throttle opening $\theta$. The amounts of coefficients B are stored as to the typical vehicle speed V and varied throttle opening $\theta$ in order to save the number of data stored in the memory. If the determined values of vehicle speed V and varied throttle opening $\theta$ are not stored in the memory, the amount of the coefficient B is calculated from the map shown in Figure 5 by a proportional calculation. The program proceeds to a step 48. In the step 48, a timer commences to count the time. The program proceeds to a step 50. In the step 50, the delayed time A, constants C1 and C2 are read from the memory. The value,

$$[C1 \cdot (RPM_{os}-RPM_{os'}) \pm C2]$$

is equal to the inclination C of the line shown in Figure 3(a). The program proceeds to a step 52. In the step 52, it is determined whether the time $T_m$ counted by the timer is more than the delayed time A. If the time $T_m$ of the timer is less than the delayed time A, the program proceeds to a step 54. If the time $T_m$ of the timer is more than or equal to the delayed time A, the program proceeds to a step 56. In the step 54, the value $RPM_{os'}$. is substituted for the desired engine speed $RPM_o$, and the program returns to the step 52. In the step 56, it is determined whether the time $T_m$ counted by the timer is equal to the delayed time A. If the time $T_m$ counted by the timer is equal to the delayed time A, the program proceeds to a step 58. If the time $T_m$ counted by the timer is more than the delayed time A, the program proceeds to a step 60. In the step 58, the value

$$[RPM_{os'}+B \cdot (RPM_{os}-RPM_{os'})]$$

is substituted for the desired engine speed $RPM_o$ and the program returns to the step 56. In the step 60, the desired engine speed $RPM_o$ changes by the amount determined by

$$[C1 \cdot (RPM_{os}-RPM_{os'}) \pm C2].$$

The program proceeds to a step 62. In the step 62, it is determined whether the absolute value $|RPM_{os}-RPM_o|$ is less than a predetermined value $\Delta RPM_b$. If the absolute value $|RPM_{os}-RPM_o|$ is more than or equal to said predetermined value $\Delta RPM_b$, the program returns to the step 52. When the absolute value $|RPM_{os}-RPM_o|$ is less than said value $\Delta RPM_b$, the program ends. When the absolute value $|RPM_{os}-RPM_o|$ is less than said value $\Delta RPM_b$, this condition means that the desired engine speed $RPM_o$ has the value which is approximate to the value $RPM_{os}$. In the step 64, the value

$$[RPM_o+D1 \cdot (RPM_{os}-RPM_{os'}) \pm D2]$$

is substituted for the desired engine speed $RPM_o$.

**Claims**

1. A method for controlling a continuously variable transmission (4) for use in a vehicle, whose controlled variable is an engine speed or a speed ratio, wherein a desired value of the controlled variable in a transient shifting condition is determined to be a different value from a desired value of the controlled variable in a steady state condition, including detecting means (26) for a throttle opening, detecting means (24) for a CVT output speed, detecting means (23) for a CVT input speed, detecting means (28) for a shift position, and an electronic control unit (100), which includes memory means (34) for storing a plurality of relationships between coefficients (B) and throttle openings ($\theta$) corresponding to different ranges of vehicle speeds, for controlling pressure in at least one hydraulic cylinder of the transmission according to a desired engine speed ($RPM_{os}$) or speed ratio corresponding to the amount of the throttle opening after the change in the amount of the throttle opening; the speed ratio being calculated from the detected CVT output speed and CVT input speed, wherein the method comprises the steps of:

detecting the throttle opening after a change in an amount of throttle opening in a throttle means on the engine (1),

detecting the shift position;

detecting the actual engine speed ($RPM_e$) which is CVT input speed;

detecting a CVT output speed;

calculating a vehicle speed from the detected shift position and the detected CVT output speed;

selecting one of said relationships between the variable coefficient (B) and the throttle opening in accordance with said calculated vehicle speed;

determining the coefficient (B) from the detected throttle opening in accordance with the selected relationship;

determining an intermediate engine speed ($RPM_{ob}$) or a speed ratio in accordance with the determined coefficient (B);

changing the actual engine speed ($RPM_e$) or speed ratio to said intermediate engine speed ($RPM_{ob}$) or speed ratio, when the continuously variable transmission (4) is in a transient shifting condition, the transient shifting condition being generated by a change in the amount of throttle opening, the intermediate engine speed ($RPM_{ob}$) or speed ratio being intermediate in value between a desired engine speed ($RPM_{os}$) or speed ratio under steady state conditions in accordance with the amount of throttle opening and the detected actual engine speed; and

gradually changing the actual engine speed or speed ratio from said intermediate engine speed ($RPM_{ob}$) or speed ratio to the desired steady state engine speed ($RPM_{os}$) or speed ratio determined by the amount of throttle opening after the change in the amount of throttle opening.

2. A method as claimed in Claim 1, wherein the method further comprises:

changing the desired engine speed ($RPM_o$) immediately after the change in amount of throttle opening to the intermediate engine speed ($RPM_{ob}$) such that the change of the desired engine speed ($RPM_o$) occurs after a predetermined lapse of time, whenever the magnitude of the difference between the actual engine speed ($RPM_e$) and the steady state desired engine speed ($RPM_{os}$) exceeds a predetermined value.

3. A method as claimed in Claim 1 or Claim 2, wherein the desired engine speed ($RPM_o$) changes linearly from the intermediate engine speed ($RPM_{ob}$) to the steady state desired engine speed ($RPM_{os}$).

4. A method as claimed in Claim 1, wherein the method further comprises:

maintaining the actual engine speed ($RPM_e$) at a constant value for a predetermined amount of time, after the change occurs in the amount of throttle opening in the throttle means.

5. A method as claimed in Claim 1, further including:-

determining, for steady state conditions, a first desired engine speed ($RPM_{os}$) before change in the throttle opening ($\theta_1$) and a second desired engine speed ($RPM_{os}$) after the change in the throttle opening ($\theta_2$);

calculating the difference between said first and second desired engine speeds;

comparing said difference with a predetermined value ($\Delta RPM_a$); and

adjusting the actual engine speed in accordance with the comparison, whereby, when said difference is smaller than the predetermined value, the actual engine speed is adjusted to approach the second desired engine speed ($RPM_{os}$) and, when said difference is larger than the predetermined value, the actual engine speed is adjusted to said intermediate engine speed ($RPM_{ob}$) and then is adjusted to approach the second desired engine speed ($RPM_{os}$) gradually, as aforesaid.

6. A method according to Claim 5 wherein the adjustment of the actual engine speed ($RPM_e$) to said intermediate engine speed ($RPM_{ob}$) is delayed for a predetermined period of time after the change in the throttle opening.

**Patentansprüche**

1. Methode zur Regelung einer stufenlos regelbaren Übertragung (4) für den Einsatz in einem Fahrzeug, bei deren Regelgröße es sich um eine Motordrehzahl oder ein Drehzahlverhältnis handelt, wobei ein gewünschter Wert der Regelgröße in einem vorübergehenden Schaltzustand als ein Wert bestimmt wird, der sich von einen gewünschten Wert der Regelgröße unter Dauerzustandsbedingung unterscheidet, umfassend Feststellvorrichtungen (26) für eine Drosselöffnung, Feststellvorrichtungen (24) für eine Ausgangsdrehzahl der stufenlos regelbaren Übertragung, Feststellvorrichtungen (23) für eine Eingangsdrehzahl der stufenlos regelbaren Übertragung, Feststellvorrichtungen (28) für eine Schaltstellung, sowie eine elektronische Regeleinheit (100), die Speichervorrichtungen (34) zur Speicherung einer Vielzahl von Verhältnissen zwischen Koeffizienten (B) und Drosselöffnungen ($\theta$) entsprechend unterschiedlichen Bereichen der Fahrzeugdrehzahlen unfaßt, um so den Druck in zumindest einem Hydraulikzylinder der Übertragung gemäß einer gewünschten Motordrehzahl ($RPM_{os}$) oder einem entsprechenden Drehzahlverhältnis entsprechend dem Grad der Drosselöffnung nach erfolgter Veränderung des Drosselöffnungsgrades regeln zu können; wobei das Drehzahlverhältnis aus der gewünschten Ausgangsdrehzahl der stufenlos regelbaren Übertragung und der Eingangsdrehzahl der stufenlos regelbaren Übertragung berechnet wird, wobei die Methode folgende Schritte umfaßt:

Feststellen der Drosselöffnung nach erfolgter Veränderung des Drosselöffnungsgrades in einer Drosselvorrichtung am Motor (1);

Feststellen der Schaltstellung;

Feststellen der tatsächlichen Motordrehzahl ($RPM_e$), wobei es sich um die Eingangsdrehzahl der stufenlos regelbaren Übertragung handelt;

Feststellen eine Ausgangsdrehzahl der stufenlos regelbaren Übertragung;

Berechnen einer Fahrzeugdrehzahl aus der festgestellten Schaltstellung und der festgestellten Ausgangsdrehzahl der stufenlos regelbaren Übertragung;

Auswählen einer der genannten Verhältnisse zwischen dem variablen Koeffizienten (B) und der Drosselöffnung gemäß genannter berechneter Fahrzeugdrehzahl;

Bestimmen des Koeffizienten (B) aus der festgestellten Drosselöffnung gemäß dem ausgewählten Verhältnis;

Bestimmen einer Motorzwischendrehzahl ($RPM_{ob}$) oder eines entsprechenden Drehzahlverhältnisses gemäß dem bestimmten Koeffizienten (B);

Verändern der tatsächlichen Motordrehzahl ($RPM_e$) oder des entsprechenden Drehzahlverhältnisses auf die genannte Motorzwischendrehzahl ($RPM_{ob}$) oder das entsprechende Drehzahlverhältnis, wenn sich die stufenlos regelbare Übertragung (4) in einem vorübergehenden Schaltzustand befindet, wobei der vorübergehende Schaltzustand durch eine Veränderung des Grades der Drosselöffnung erzeugt wird, und wobei die Motorzwischendrehzahl ($RPM_{ob}$) oder das entsprechende Drehzahlverhältnis wertmäßig zwischen einer gewünschten Motordrehzahl ($RPM_{os}$) oder einem entsprechenden Drehzahlverhältnis unter Dauerzustandsbedingungen gemäß dem Grad der Drosselöffnung und der festgestellten tatsächlichen Motordrehzahl liegt; und

allmähliches Verändern der tatsächlichen Motordrehzahl oder des entsprechenden Drehzahlverhätnisses von der genannten Motorzwischendrehzahl ($RPM_{ob}$) oder dem entsprechenden Drehzahlverhältnis zur gewünschten Dauerzustandsmotordrehzahl ($RPM_{os}$) oder dem entsprechenden Drehzahlverhältnis, wobei die Bestimmung über den Grad der Drosselöffnung nach erfolgter Veränderung des Drosselöffnungsgrades vorgenommen wird.

2. Methode gemäß Anspruch 1, wobei die Methode weiterhin umfaßt;

Verändern der gewünschten Motordrehzahl ($RPM_o$), und zwar unmittelbar nach erfolgter Veränderung des Grades der Drosselöffnung, auf die Motorzwischendrehzahl ($RPM_{ob}$), so daß die Veränderung der gewünschten Motordrehzahl ($RPM_o$) immer dann nach einer vorbestimmten Zeitspanne erfolgt, wenn die Größenordnung der Differenz zwischen der tatsächlichen Motordrehzahl ($RPM_e$) und der gewünschten Dauerzustandsmotordrehzahl ($RPM_{os}$) einen vorbestimmten Wert übersteigt.

3. Methode gemäß Anspruch 1 oder Anspruch 2, wobei sich die gewünschte Motordrehzahl ($RPM_o$) linear von der Motorzwischendrehzahl ($RPM_{ob}$) zur gewünschten Dauerzustandsmotordrehzahl ($RPM_{os}$) hin verändert.

4. Methode gemäß Anspruch 1, wobei die Methode weiterhin umfaßt:

Beibehalten der tatsächlichen Motordrehzahl ($RPM_e$) auf einem konstanten Wert für einen vorbestimmten Zeitraum, und zwar nach erfolgter Veränderung des Grades der Drosselöffnung in den Drosselvorrichtungen.

5. Methode gemäß Anspruch 1, weiterhin umfassend:

Bestimmen einer ersten gewünschten Motordrehzahl ($RPM_{os}$) für Dauerzustandsbedingungen, bevor eine Veränderung der Drosselöffnung ($\theta_1$) erfolgt, und einer zweiten gewünschten Motordrehzahl ($RPM_{os}$), nachdem die Drosselöffnung ($\theta_2$) verändert wurde;

Berechnen der Differenz zwischen den genannten ersten und zweiten gewünschten Motordrehzahlen;

Vergleichen der genannten Differenz mit einem vorbestimmten Wert ($\Delta RPM_a$); und

Einstellen der tatsächlichen Motordrehzahl gemäß erfolgtem Vergleich, wobei, wenn die genannte Differenz geringer als der vorbestimmte Wert ist, die tatsächliche Motordrehzahl so eingestellt wird, daß sie sich der zweiten gewünschten Motordrehzahl ($RPM_{os}$) nähert, und wobei, wenn die genannte Differenz größer als der vorbestimmte Wert ist, die tatsächliche Motordrehzahl zunächst auf die genannte Motorzwischendrehzahl ($RPM_{ob}$) und dann so eingestellt wird, daß sie sich, wie vorstehend erwähnt, allmächlich der zweiten gewünschten Motordrehzahl ($RPM_{os}$) nähert.

6. Methode gemäß Anspruch 5, wobei die Einstellung der tatsächlichen Motordrehzahl ($RPM_e$) auf die genannte Motorzwischendrehzahl ($RPM_{ob}$) um einen vorbestimmten Zeitraum verzögert wird, nachdem die Drosselöffnung verändert wurde.

**Revendications**

1. Un procédé pour commander une transmission variable de façon continue (4) dénommée CVT et utilisable dans un véhicule, dont une variable contrôlée est une vitesse de moteur ou un rapport de vitesses, selon lequel une valeur souhaitée de la variable contrôlée dans un état transistoire de changement de rapport est déterminée de façon à prendre une valeur différente d'une valeur souhaitée de la variable contrôlée dans un état de régime stable, comportant un moyen de détection (26) d'une ouverture de papillon, un moyen de détection (24) d'une vitesse de sortie de CVT, un moyen de détection (23) d'une vitesse d'entrée de CVT, un moyen de détection (28) d'une position de changement de rapport et une unité de commande électronique (100), qui comprend des moyens de mémoire (34) pour mémoriser une pluralité de relations entre des coefficients (B) et des ouvertures de papillon ($\theta$) en correspondance à différentes gammes de vitesses du véhicule, afin de commander la pression dans au moins un vérin hydraulique de la transmission, en correspondance avec une vitesse souhaitée de moteur ($RPM_{os}$) ou bien un rapport de vitesses correspondant à la valeur d'ouverture du papillon après le changement du degré d'ouverture de papillon, le rapport de vitesses étant calculé à partir de la vitesse détectée à la sortie de CVT et de la vitesse détectée à l'entrée de CVT, le procédé comprenant les étapes consistant à:

—détecter l'ouverture de papillon après un changement du degré d'ouverture de papillon dans les moyens d'étranglement à l'admission du moteur (1);

—détecter la position du changement de rapport;

—détecter la vitesse réelle de moteur ($RPM_e$) qui est la vitesse d'entrée de CVT;

—détecter la vitesse de sortie de CVT;

—calculer une vitesse de véhicule à partir de la position détectée pour le changement de rapport et à partir de la vitesse détectée à la sortie de CVT;

—sélectionner une desdites relations entre le coefficient variable (B) et l'ouverture de papillon en concordance avec ladite vitesse calculée du véhicule;

—déterminer le coefficient (B) à partir de l'ouverture de papillon détectée en concordance avec la relation sélectionnée;

—déterminer une vitesse intermédiaire de moteur ($RPM_{ob}$) ou bien un rapport de vitesse en concordance avec le coefficient déterminé (B);

—faire varier la vitesse réelle de moteur ($RPM_e$) ou le rapport de vitesse réelle en ladite vitesse intermédiaire de moteur ($RPM_{ob}$) ou ledit rapport de vitesse intermédiaire quand la transmssion variable de façon continue (4) se trouve dans un état transitoire de changement de rapport, l'état transitoire de changement de rapport étant engendré par une variation du degré d'ouverture de papillon, la vitesse intermédiaire de moteur ($RPM_{ob}$) ou le rapport de vitesse intermédiaire ayant une valeur intermédiaire entre une vitesse souhaitée de moteur ($RPM_{os}$) ou un rapport de vitesses souhaité dans des états de régime stable en concordance avec le degré d'ouverture de papillon et avec la vitesse du moteur réelle détectée;

—changer graduellement la vitesse réelle du moteur ou le rapport de vitesses réel depuis ladite vitesse intermédiaire de moteur ($RPM_{ob}$) ou ledit rapport de vitesses intermédiaire jusqu'a la vitesse souhaitée de moteur en régime stable ($RPM_{os}$) ou le rapport de vitesses souhaité en régime stable, déterminé par le degré d'ouverture de papilllon après le changement du degré d'ouverture de papillon.

2. Un procédé tel que revendiqué dans la revendication 1, et consistant en outre à:

—changer la vitesse souhaitée de moteur ($RPM_o$) immédiatement après le changement du degré d'ouverture de papillon pour la faire passer à la vitesse intermédiaire de moteur ($RPM_{ob}$) de telle sorte que le changement de la vitesse souhaitée de moteur ($RPM_o$) se produise au bout d'un intervalle de temps prédéterminé, à chaque fois que l'amplitude de la différence entre la vitesse réelle de moteur ($RPM_e$) et la vitesse souhaitée du moteur en régime stable ($RPM_{os}$) dépasse une valeur prédéterminée.

3. Un procédé tel que revendiqué dans la revendication 1 ou la revendication 2, dans lequel la vitesse souhaitée de moteur ($RPM_o$) varie linéairement depuis la vitesse intermédiaire de moteur ($RPM_{ob}$) jusqu'à la vitesse souhaitée de moteur en régime stable ($RPM_{os}$).

4. Un procédé tel que revendiqué dans la revendication 1, consistant en outre à:

—maintenir la vitesse réelle de moteur ($RPM_e$) à une valeur constante pendant un intervalle de temps prédéterminé, après qu'un changement se soit produit dans le degré d'ouverture de papillon dans les moyens d'étranglement à l'admission.

5. Un procédé tel que revendiqué dans la revendication 1, consistant en outre à:

—déterminer, dans des états de régime stable, une première vitesse souhaitée de moteur ($RPM_{os}$) avant un changement de l'ouverture de papillon ($\theta_1$) et une seconde vitesse souhaitée de moteur ($RPM_{os}$) après le changement de l'ouverture de papillon ($\theta_2$);

—calculer la différence entre leddites première et seconde vitesses souhaitées du moteur;

— comparer ladite différence avec une valeur prédéterminée ($\Delta RPM_a$); et

—régler la vitesse réelle du moteur en concordance avec la comparaison de telle sorte que, quand ladite différence est plus petite que la valeur prédéteminée, la vitesse réelle du moteur soit réglée de manière à se rapprocher de la seconde vitesse souhaitée de moteur ($RPM_{os}$) et que, quand ladite différence est supérieure à la valeur prédéterminée, la vitesse réelle du moteur soit réglée à ladite vitesse intermédiaire de moteur ($RPM_{ob}$) et soit ensuite réglée de manière à se rapprocher graduellement, comme indiqué ci-dessus, de la seconde vitesse souhaitée de moteur ($RPM_{os}$).

6. Un procédé selon la revendication 5, caractérisé en ce que le réglage de la vitesse réelle de moteur ($RPM_e$) à ladite vitesse intermédiaire de moteur ($RPM_{ob}$) est retardé pendant une période de temps prédéterminée après le changement de l'ouverture de papillon.

Fig. 1

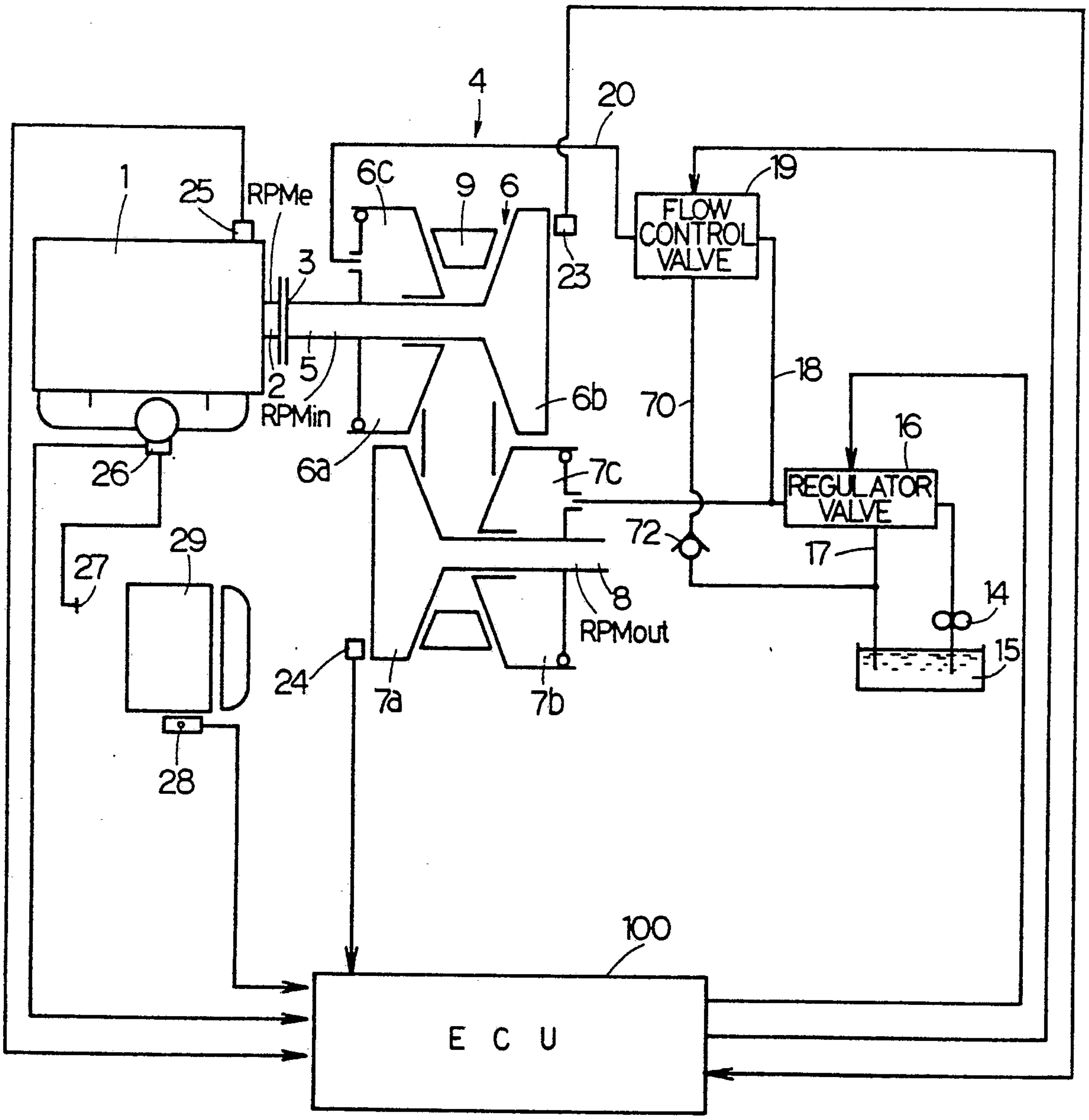
4
20
1
25
RPMe
6C
9
6
19
FLOW CONTROL VALVE
3
23
5
2
RPMin
18
6b
70
6a
26
7c
16
REGULATOR VALVE
72
29
17
27
8
14
RPMout
15
24
7a
7b
28
100
E C U

Fig. 2

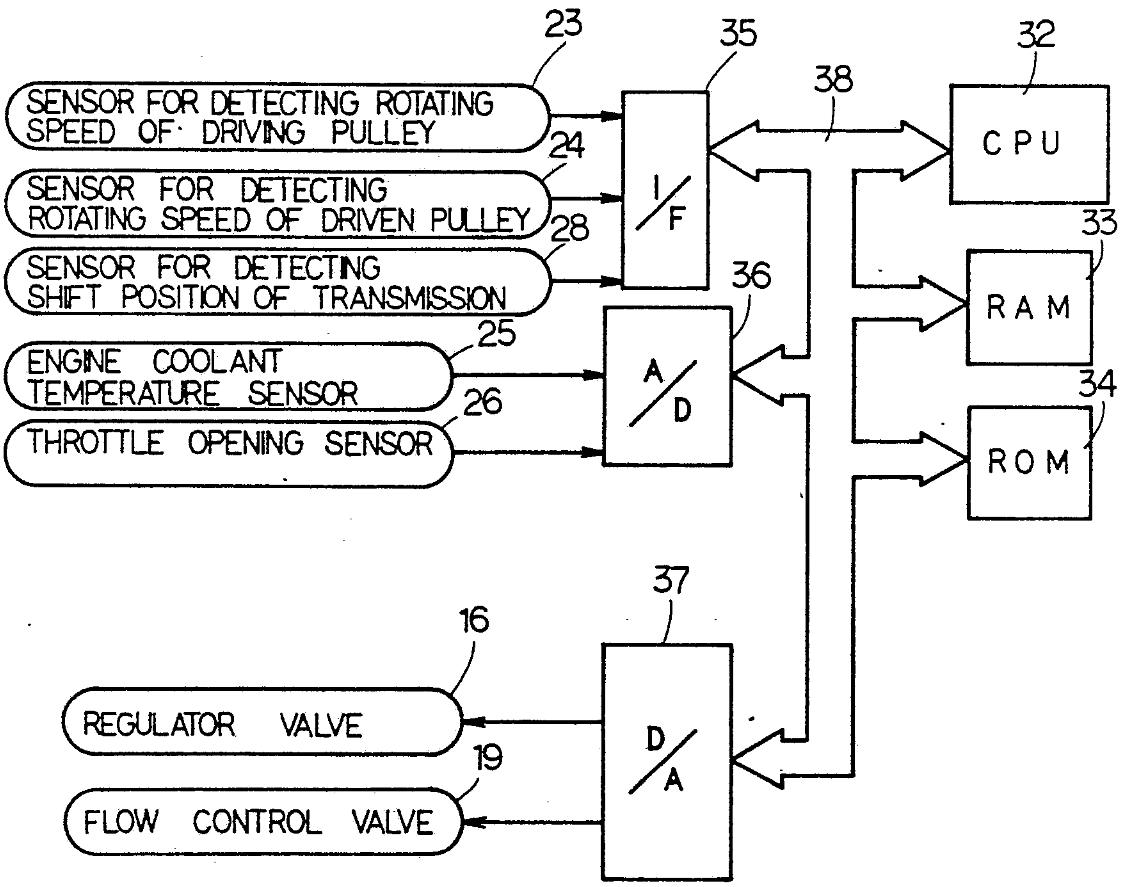
23
35
32
38
SENSOR FOR DETECTING ROTATING SPEED OF DRIVING PULLEY
I/F
CPU
24
SENSOR FOR DETECTING ROTATING SPEED OF DRIVEN PULLEY
33
28
SENSOR FOR DETECTING SHIFT POSITION OF TRANSMISSION
36
RAM
25
ENGINE COOLANT TEMPERATURE SENSOR
A/D
34
26
THROTTLE OPENING SENSOR
ROM
37
16
REGULATOR VALVE
D/A
19
FLOW CONTROL VALVE

Fig. 3

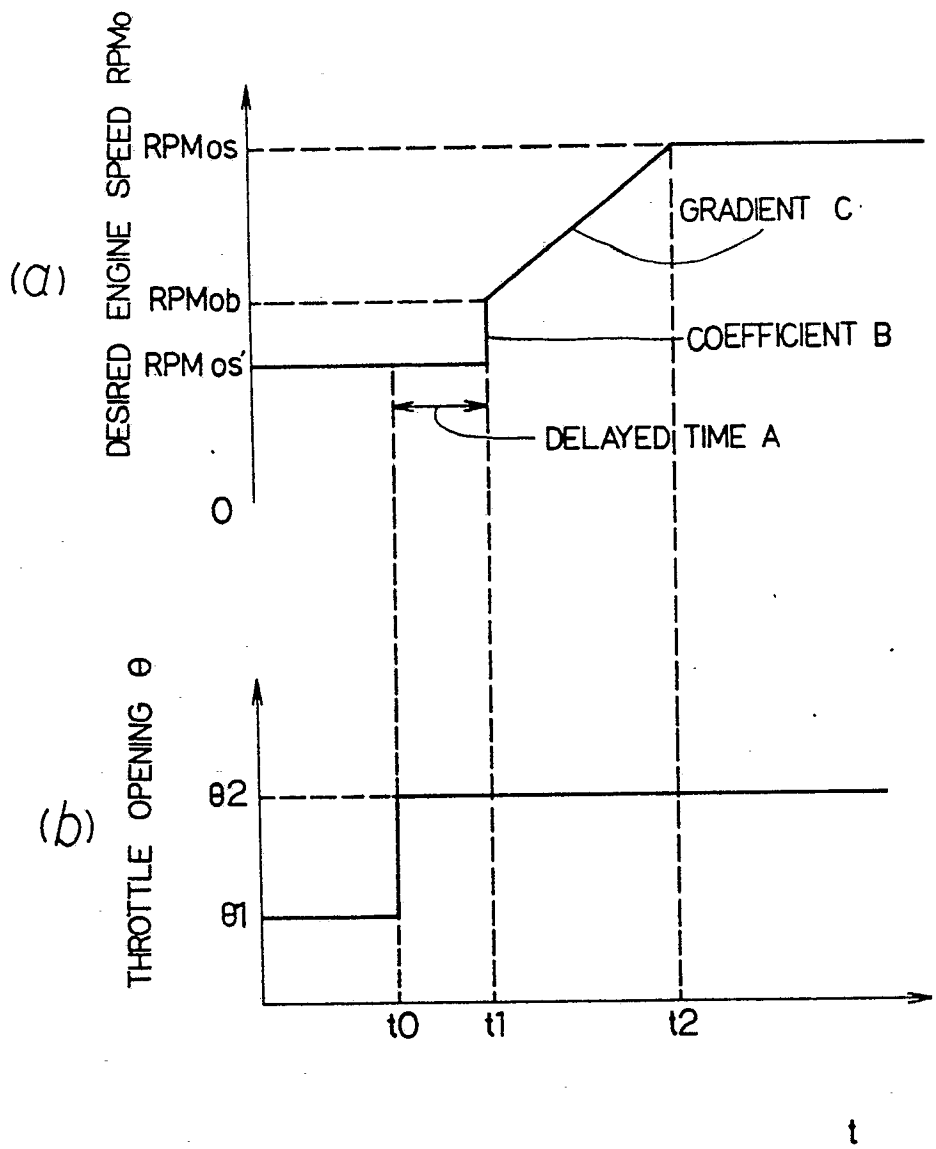
(a)
DESIRED ENGINE SPEED RPMo
RPMos
RPMob
RPM os'
0
GRADIENT C
COEFFICIENT B
DELAYED TIME A
(b)
THROTTLE OPENING θ
θ2
θ1
t0
t1
t2
t

Fig. 4

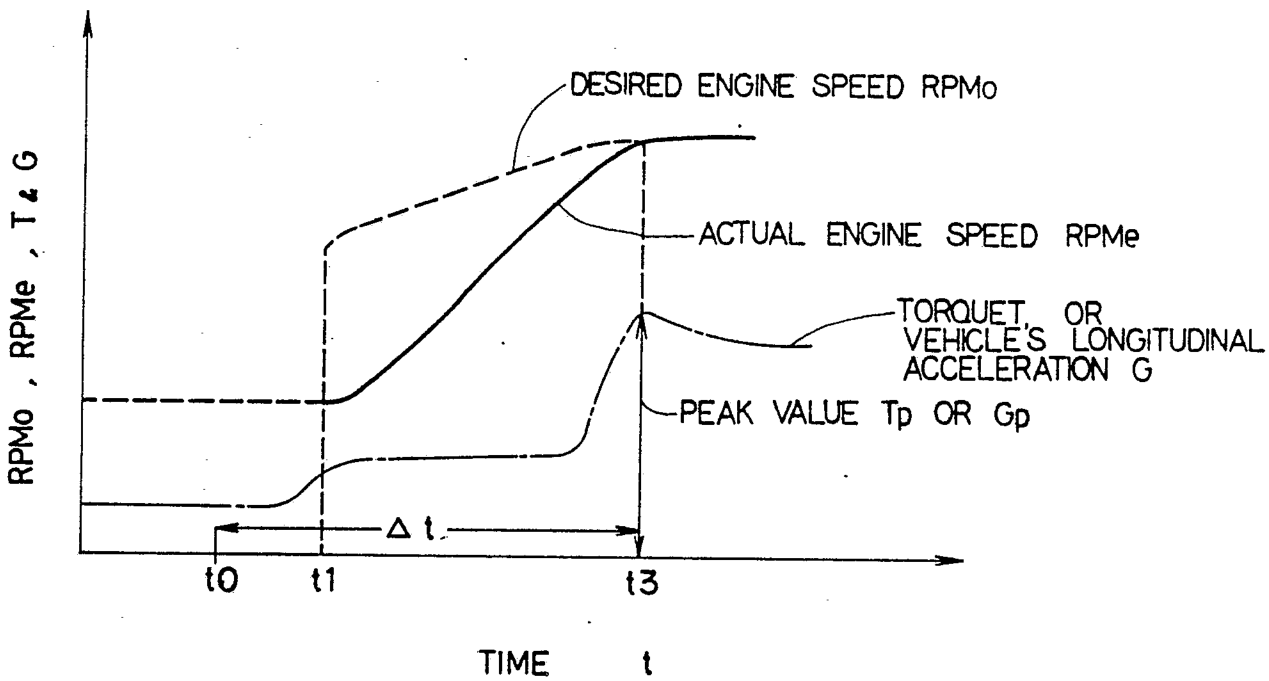
DESIRED ENGINE SPEED RPMo
ACTUAL ENGINE SPEED RPMe
TORQUET OR VEHICLE'S LONGITUDINAL ACCELERATION G
PEAK VALUE Tp OR Gp
RPMo , RPMe , T & G
Δ t
t0
t1
t3
TIME t

Fig. 5

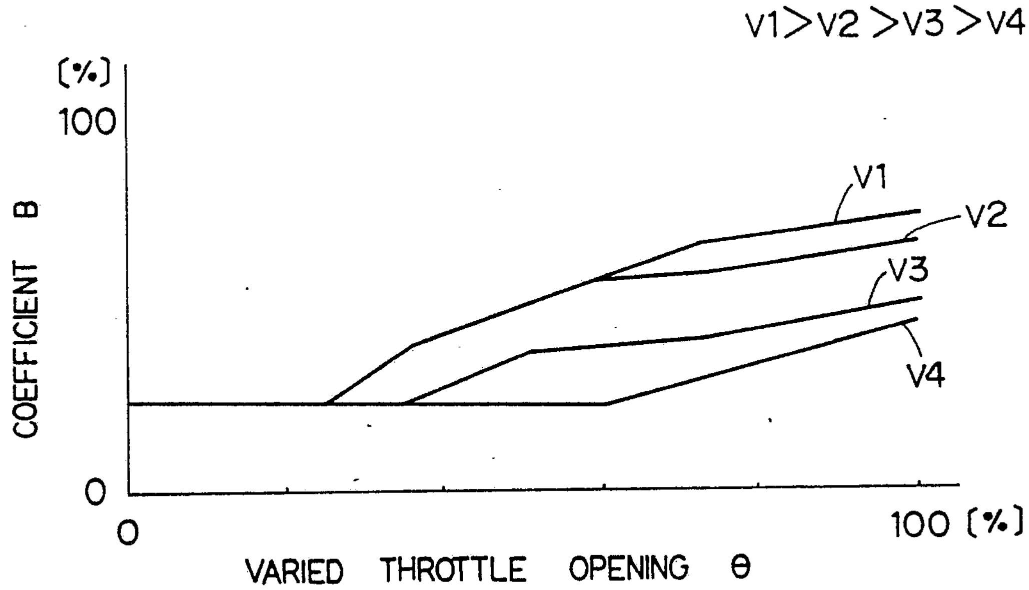
V1>V2>V3>V4
[%]
100
COEFFICIENT B
0
V1
V2
V3
V4
0
100 [%]
VARIED THROTTLE OPENING θ

Fig. 6

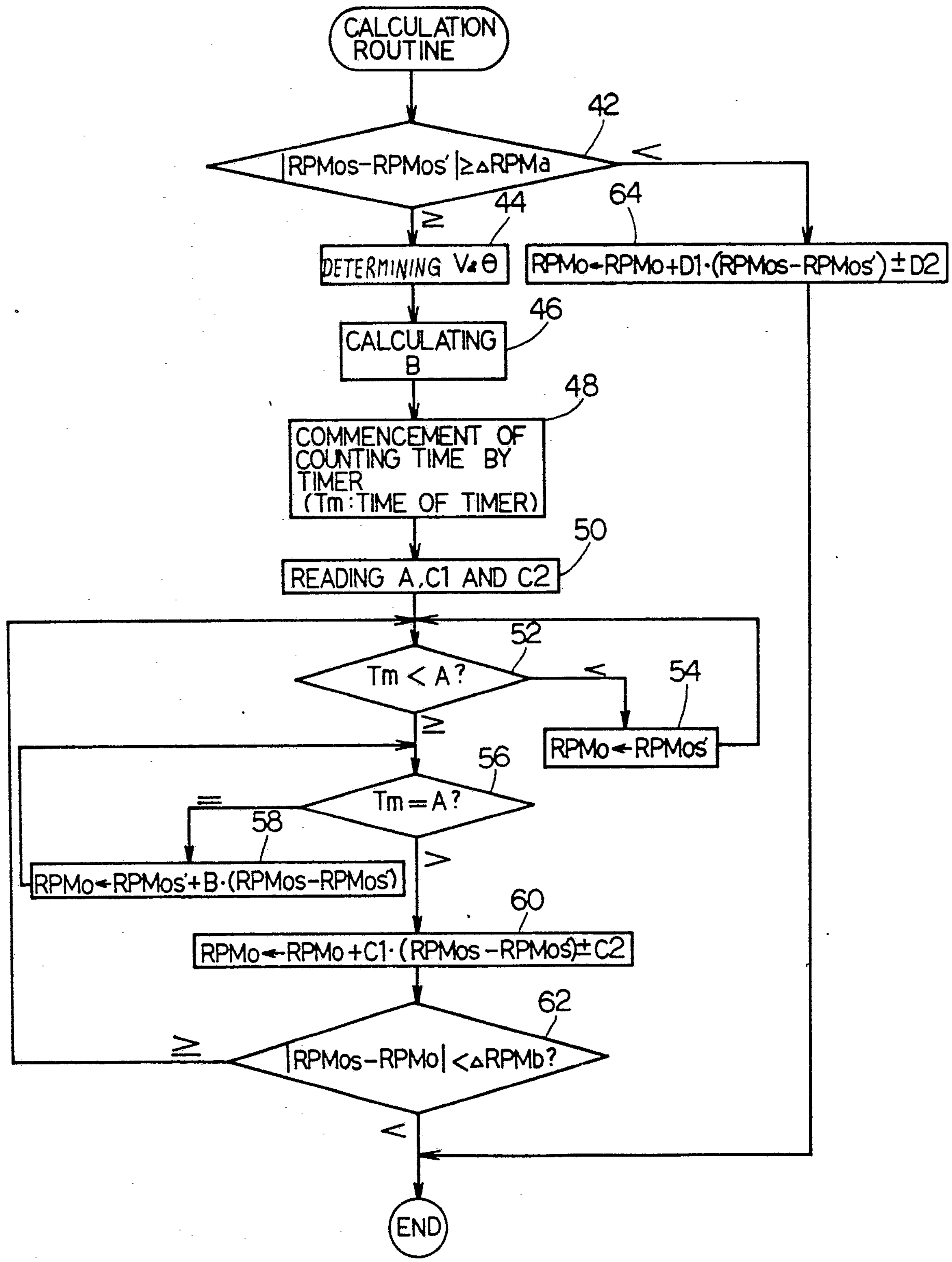
CALCULATION ROUTINE
42
|RPMos−RPMos′|≥ΔRPMa
<
≥
44
DETERMINING V & θ
64
RPMo←RPMo+D1·(RPMos−RPMos′)±D2
46
CALCULATING B
48
COMMENCEMENT OF COUNTING TIME BY TIMER (Tm: TIME OF TIMER)
50
READING A, C1 AND C2
52
Tm < A ?
<
54
RPMo←RPMos′
≥
56
Tm = A ?
=
58
RPMo←RPMos′+B·(RPMos−RPMos′)
>
60
RPMo←RPMo+C1·(RPMos−RPMos′)±C2
62
|RPMos−RPMo| < ΔRPMb ?
≥
<
END